# FASCICULE DE BREVET EUROPEEN

(11) **EP 3 060 827 B1**
(45) Date de publication et mention de la délivrance du brevet: **08.05.2019**
(21) Numéro de dépôt: 14824880.0
(22) Date de dépôt: 22.10.2014
(51) Int. Cl.: F16F 15/02

(54) **DISPOSITIF D'AMORTISSEMENT DE VIBRATIONS D'UN CABLE**
VORRICHTUNG ZUR DÄMPFUNG VON SCHWINGUNGEN IN EINEM KABEL
DEVICE FOR DAMPING VIBRATIONS IN A CABLE

(30) Priorité: 23.10.2013 FR 1360318
(43) Date de publication de la demande: 31.08.2016
(73) Titulaire: Soletanche Freyssinet, 92500 Rueil Malmaison (FR)
(72) Inventeur: STUBLER, Jérôme, F-75016 Paris (FR); MELLIER, Erik, 78220 VIROFLAY (FR)
(74) Mandataire: Cabinet Plasseraud
(86) Numéro de dépôt international: PCT/FR2014/052693
(87) Numéro de publication internationale: WO 2015/059413

(56) Documents cités:
- FR-A1- 2 664 920
- FR-A1- 2 854 217

## Description

La présente invention concerne les techniques d'amortissement des vibrations que subissent les câbles utilisés pour suspendre des ouvrages d'art.

Elle s'applique notamment aux suspensions haubanées de ponts. Les haubans vibrent notamment à cause du vent et de la circulation des véhicules. Différents types de dispositif ont été proposés pour amortir ces vibrations.

Dans un premier type de dispositif d'amortissement (voir par exemple EP 0 343 054 A1, DE 295 17 250 U1 ou WO 98/04780 A1), l'énergie vibratoire est dissipée autour du câble, dans une zone délimitée radialement par un élément fixé à la structure suspendue. Cet élément peut être un bras s'étendant entre le câble et la structure suspendue, ou encore un tube recevant la partie inférieure du câble. Les amplitudes des vibrations amorties sont limitées avec ce type de dispositif.

D'autres dispositifs utilisent des amortisseurs à course linéaire tels que des pistons hydrauliques. Ces pistons peuvent être disposés sur des bras s'étendant entre les câbles et la structure suspendue (voir par exemple JP 09-59921 A) ou entre le câble et un tube fixé à la structure suspendue et contenant la partie inférieure du câble (voir par exemple FR 2 859 260 A1 ou JP 06-58370 A).

Un dispositif d'amortissement dit pendulaire comporte un bras oscillant connecté au câble, dont les oscillations sont amorties par frottement visqueux. FR 2 664 920 A1 décrit un exemple d'un tel dispositif pendulaire.

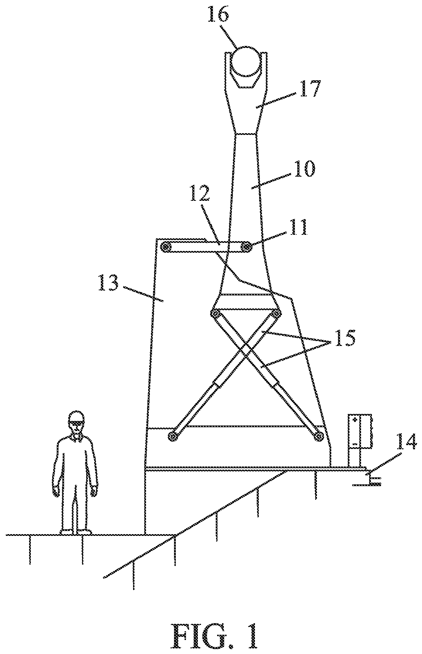

Dans une réalisation du dispositif pendulaire d'amortissement, représentée sur la figure 1, le bras 10 oscille autour d'un pivot 11 installé sur un support 12 lui-même pivotant sur un châssis 13 fixé au tablier 14 du pont. Deux pistons hydrauliques 15 disposés en X sont montés entre la partie inférieure du bras 10 et le châssis 13 ou le tablier 14. Les mouvements verticaux du hauban 16, tenu dans un coupleur 17 à la partie supérieure du bras 10, sont amorties par les pistons 15 lorsque le bras 10 monte et descend, les déplacements verticaux du pivot 11 étant acceptés par inclinaison du support 12. Les mouvements horizontaux du hauban 16 font osciller le bras 10 autour du pivot 11 et sont amortis de façon différentielle par les pistons croisés 15.

Le dispositif pendulaire permet de fournir de forts amortissements sur les câbles, notamment les longs câbles. Il est typiquement situé en partie basse du câble, à environ 2-3% de sa longueur totale depuis l'ancrage bas. La conception de ce dispositif permet d'amortir à la fois les mouvements verticaux et transversaux du câble, sur des courses importantes, de l'ordre typiquement de ±100 à ±150 mm.

Mais les déviations des câbles sont parfois plus importantes encore, notamment lorsque l'ouvrage est flexible. Les courses nécessaires sont encore plus grandes, pouvant par exemple aller jusqu'à ±700 mm.

Le concept du dispositif pendulaire trouve alors ses limites : les vérins ayant des courses très longues, le dispositif devient exagérément encombrant, comme le montre la figure 1. Un piston amortisseur a typiquement une longueur de trois fois sa course, de sorte qu'on peut avoir besoin des pistons de plus de 2 mètres de longueur. Le positionnement d'un dispositif pendulaire aussi encombrant sur un pont devient quasiment impossible.

Un but de la présente invention est de perfectionner le dispositif pendulaire et de faciliter son insertion dans l'ouvrage, en particulier si les amplitudes des vibrations à amortir sont importantes.

Il est proposé un dispositif d'amortissement de vibrations d'un câble, notamment d'un hauban de pont, lequel dispositif comprend:
- un bras oscillant autour d'un pivot ;
- un premier amortisseur pour amortir certaines au moins des oscillations du bras;
- un coupleur attaché au câble ;
- un second amortisseur à course linéaire ayant une extrémité supérieure reliée au coupleur et une extrémité inférieure reliée au bras ; et
- un guide pour faire coulisser le coupleur par rapport au bras parallèlement à la course du second amortisseur de façon que les mouvements du câble transversaux à la course du second amortisseur soient communiqués au bras indépendamment du second amortisseur.

Le guide forme une sorte de glissière qui réalise un découplage entre les mouvements du câble perpendiculaires au bras, qui sont amortis par le premier amortisseur, et les mouvements parallèles au bras, qui sont amortis par le second amortisseur. Le second amortisseur peut avoir une course relativement longue sans nuire fortement à l'encombrement du dispositif et à son esthétique. Le guide l'empêche d'être soumis à des moments de flexion néfastes à son fonctionnement.

Dans une réalisation du dispositif, le premier amortisseur comprend au moins un piston disposé transversalement au bras et connecté au bras au-dessous du pivot. Le piston peut être placé sous une face supérieure de la structure suspendue à l'aide du câble, notamment dans le cas où le pivot est positionné relativement au bras de façon que la distance entre le pivot et le point d'attache du coupleur sur le câble soit supérieure au bras de levier, relativement au pivot, de la force exercée par le piston sur le bras. La différence de bras de levier, relativement au pivot, entre les efforts transversaux appliqués par le câble vibrant et la résistance opposée par le piston du premier amortisseur permet à ce piston d'avoir une course réduite. Il peut donc être d'un encombrement limité et venir se loger dans une cavité ménagée dans la structure suspendue. Avantageusement, l'effet de levier est augmenté en prévoyant que la distance entre le pivot et le point d'attache du coupleur soit au moins trois fois supérieure au bras de levier, relativement au pivot, de la force exercée par le piston sur le bras.

Le pivot, lorsqu'il est placé dans l'épaisseur de la structure suspendue à l'aide du câble, peut être rendu invisible des personnes circulant sur cette structure. Il fournit avantageusement une articulation à rotule ou à cardan, ce qui permet au dispositif d'accepter des mouvements du coupleur parallèlement à l'axe du câble, dus par exemple à la dilatation thermique de celui-ci. On peut prévoir que le pivot soit sensiblement fixe par rapport à une structure suspendue à l'aide du câble.

Un autre aspect de la présente invention se rapporte à un pont à haubans, comprenant au moins un pylône, un tablier, des haubans constitués de câbles s'étendant obliquement entre le pylône et le tablier pour suspendre le tablier et, monté entre au moins un câble et le tablier, un dispositif d'amortissement tel que défini ci-dessus.

D'autres particularités et avantages de la présente invention apparaîtront dans la description ci-après d'un exemple de réalisation non limitatif, en référence aux dessins annexés, dans lesquels :
- la figure 1 est un schéma d'un dispositif pendulaire d'amortissement antérieurement connu ;
- la figure 2 est une vue schématique de profil d'un pont à haubans ;
- la figure 3 est un schéma illustrant la cinématique d'un exemple de dispositif d'amortissement selon l'invention ;
- la figure 4 est une vue de côté de la partie basse d'un hauban équipé d'un dispositif d'amortissement selon une réalisation de l'invention ;
- la figure 5 est une vue en coupe du dispositif d'amortissement de la figure 4, suivant le plan V-V montré sur la figure 4 ; et
- les figures 6 à 8 sont des schémas illustrant des variantes possibles du dispositif d'amortissement.

L'invention est décrite ci-après dans son application non limitative aux ponts à haubans. Les câbles dont il s'agit d'amortir les vibrations sont alors les haubans 16 qui s'étendent entre un pylône 20 du pont et son tablier 14 pour suspendre le tablier 14.

Un ou plusieurs des haubans 16 sont équipés d'un dispositif d'amortissement 22 comportant un bras qui s'étend transversalement au hauban 16 entre un point d'attache P situé à proximité de son ancrage bas (par exemple à quelques % de la longueur totale du hauban) et le tablier 14. En général, le bras du dispositif d'amortissement 22 est situé sensiblement dans le même plan vertical que le hauban 16 auquel il est raccordé. Cependant il est possible que le bras s'écarte légèrement de ce plan.

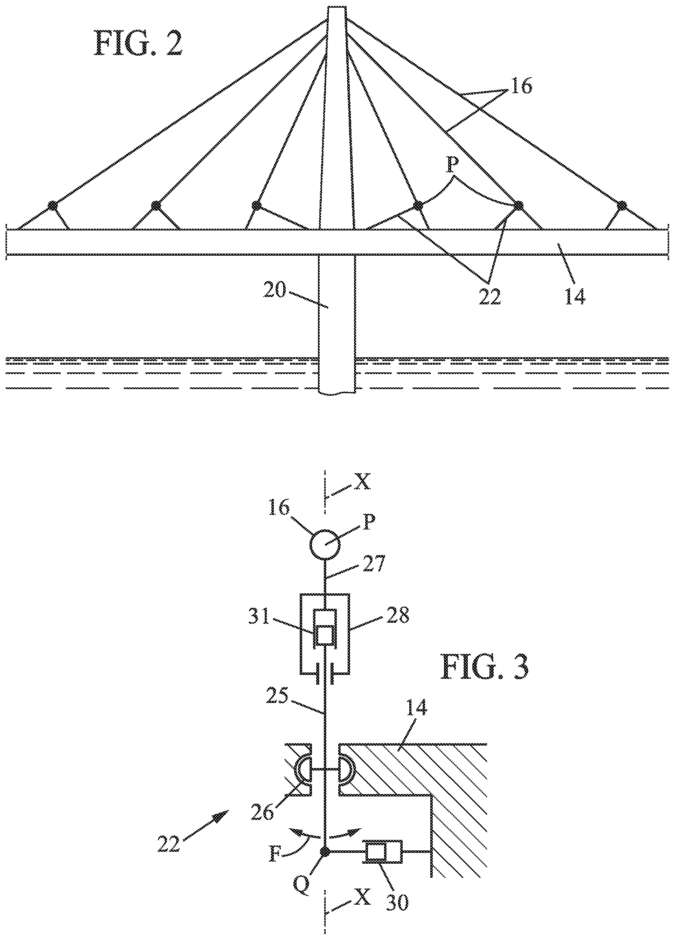

La figure 3 montre schématiquement la cinématique d'un dispositif d'amortissement 22 tel que celui représenté sur la figure 2. Le bras 25 du dispositif 22 est orienté selon une direction notée X et articulé sur le tablier du pont au moyen d'un pivot 26, par exemple à rotule. Il peut ainsi osciller autour du pivot 26, et son mouvement d'oscillation (flèches F sur la figure 3) est amorti au moyen d'un premier amortisseur 30.

Dans l'exemple représenté sur la figure 3, le premier amortisseur 30 est un piston hydraulique ayant une première extrémité connectée en un point fixe du tablier 14 et une deuxième extrémité connectée au bras 25 en un point Q voisin de son extrémité inférieure. Le premier amortisseur 30 s'étend sensiblement perpendiculairement au bras 25. D'autres agencements sont possibles pour le premier oscillateur 30 : on peut prévoir qu'il y ait plusieurs pistons hydrauliques, ou que le piston hydraulique (ou l'un d'entre eux) soit situé au-dessus du pivot 26, ou encore que l'effet d'amortissement soit obtenu par le brassage d'un milieu visqueux dans lequel s'insère l'extrémité inférieure du bras 25 (de façon semblable à ce qui est décrit dans FR 2 664 920 A1)... Lorsque le premier amortisseur 30 est de type linéaire, il est préférable que ses connexions au bras 25 et au point fixe du tablier 14 soient des connexions articulées, par exemple à rotule. Ainsi, l'amortisseur linéaire 30 n'est pas soumis à des moments de flexion indésirables lorsque la direction X oscille autour du pivot 26 en raison des mouvements transversaux ou axiaux du hauban 16. La disposition de l'amortisseur linéaire 30 n'est pas obligatoirement horizontale. En outre, son point d'articulation Q au bras 25 peut appartenir à un prolongement du bras 25 formant un coude avec celui-ci.

Entre le bras 25 et le coupleur 27 monté sur le hauban 16 en un point d'attache P, un guide à glissière 28 est mis en place pour assurer que le coupleur 27 reste dans l'alignement du bras 25. Un second amortisseur 31 à course linéaire, tel qu'un piston hydraulique, est monté entre le coupleur 27 et le bras 25. Cet amortisseur 31 amortit les mouvements du point d'attache P du hauban 16 parallèlement au bras 25.

Dans la configuration représentée sur la figure 2, les bras des dispositifs d'amortissement 22 sont orientés perpendiculairement aux haubans respectifs 16 dont ils amortissent les mouvements. Ceci procure l'efficacité maximum du dispositif d'amortissement. D'autres agencements sont néanmoins possibles, par exemple en disposant les bras 25 verticalement (donc avec un angle non droit relativement à leurs haubans respectifs). Pour amortir les vibrations d'un hauban 16, le dispositif 22 peut également avoir deux bras disposés de part et d'autre du plan vertical contenant le hauban 16.

Le guide 28 évite de communiquer au piston 31 des efforts de flexion indésirables résultant des mouvements du hauban 16 perpendiculairement au bras 25. Il permet un découplage entre l'amortissement des mouvements parallèles au bras, qu'assure l'amortisseur 31, et l'amortissement des mouvements perpendiculaires au bras, qu'assure l'amortisseur 30. Les deux amortisseurs 30, 31 peuvent alors être conçus et optimisés de manière indépendante pour obtenir les effets d'amortissement recherchés.

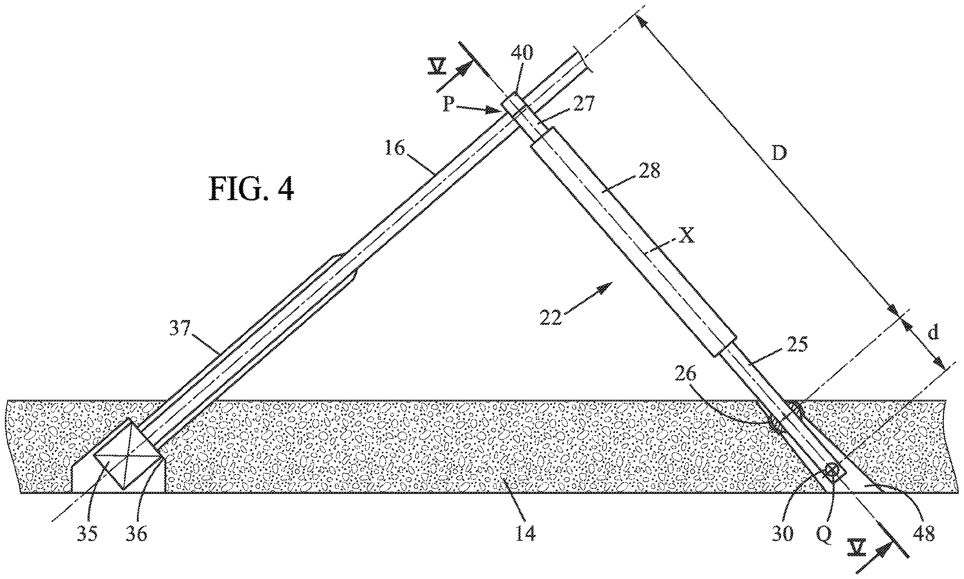

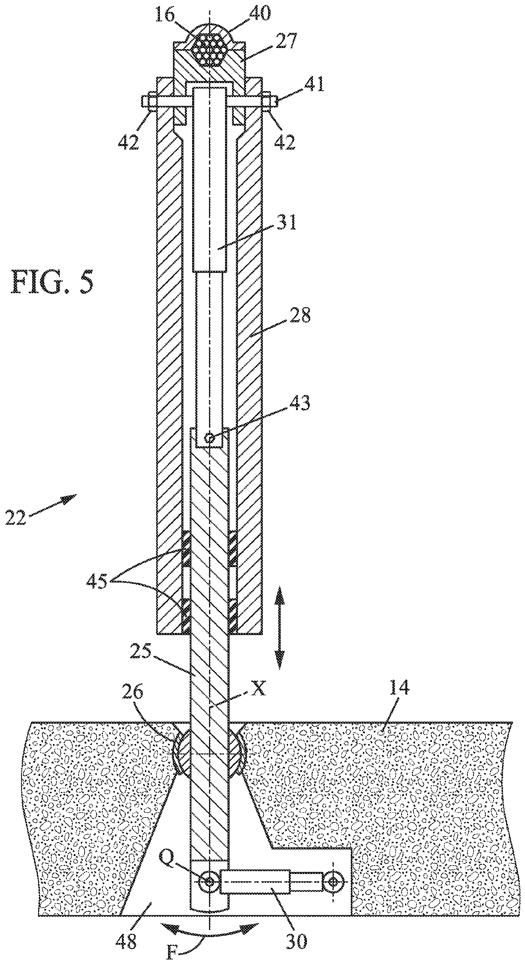

Les figures 4 et 5 montrent le tablier 14 d'un pont tenu par une suspension haubanée, et la zone d'ancrage de l'un des haubans 16 sur ce tablier 14. Chaque hauban est un câble typiquement constitué d'un faisceau de torons métalliques éventuellement du type gainé-ciré ou gainé-graissé. Le dispositif d'ancrage 35 est par exemple monté en sous-face du tablier 14, où il prend appui sur une surface 36 perpendiculaire au tracé du hauban 16. Le hauban 16 émerge du tablier 14 dans un tube guide 37 qui protège sa partie inférieure.

Le point d'attache P du dispositif d'amortissement 22 est situé au-delà du tube guide 37. En ce point P, un collier 40 est serré autour du faisceau de torons constituant le hauban 16 pour le fixer au coupleur 27.

Dans l'exemple de réalisation des figures 4 et 5, le guide à glissière 28 est réalisé sous la forme d'un profilé métallique creux dans lequel le piston 31 est logé. Dans cet exemple, une tige filetée 41 et des écrous 42 assurent la fixation des extrémités supérieures du piston 31 et du guide 28 sur le coupleur 27. Cette fixation peut être articulée, par exemple avec une rotule. Une autre liaison 43, par exemple à vis ou à goupille, connecte l'extrémité inférieure du piston 31 à l'extrémité supérieure du bras 25. Cette autre liaison peut être articulée de façon identique à la fixation supérieure.

Le bras 25 du dispositif d'amortissement sort du guide 28 à son extrémité inférieure. Le guide 28 a, relativement au bras 25, un mouvement télescopique amorti par le piston 31, et il ne communique pas de moments de flexion au piston 31. Des patins ou paliers de glissement 45 sont disposés entre le bras 25 et la face interne du guide 28 pour guider le mouvement télescopique et minimiser le coefficient de frottement entre ces deux pièces, afin de ne pas perturber le fonctionnement du dispositif d'amortissement 22. Ces patins ou paliers 45, fixés soit sur le bras 25 soit à l'intérieur du guide 28, sont par exemple réalisés en PolyTétraFluoroEthylène (PTFE) ou en polyéthylène à poids moléculaire ultra élevé (UHMWPE, « Ultra High Molecular Weight PolyEthylene »).

On notera que le second amortisseur 31 et le guide à glissière 28 peuvent présenter des agencements très variés.

Par exemple, plutôt que d'avoir un piston hydraulique 31 en position centrale entouré par le guide 28 comme sur les figures 4 et 5, le guidage du mouvement télescopique par rapport au bras 25 peut être assuré par un guide central avec un second amortisseur 31 à course linéaire comprenant un ou plusieurs pistons parallèles en position excentrée, raccordés à des platines respectivement solidaires du coupleur 27 et du bras 25.

Dans le cas des figures 4 et 5, le contact glissant (patins 45) par lequel le guide 28 autorise le coulissement du coupleur 27 par rapport au bras 25 est situé sous l'extrémité basse de l'amortisseur linéaire 31. Il est possible, en variante, que ce contact glissant soit situé au-dessus de l'amortisseur linéaire 31. Par exemple, le coupleur 27 peut être monté coulissant le long de rails parallèles à l'axe X et reliés rigidement au bras 25 oscillant autour du pivot 26.

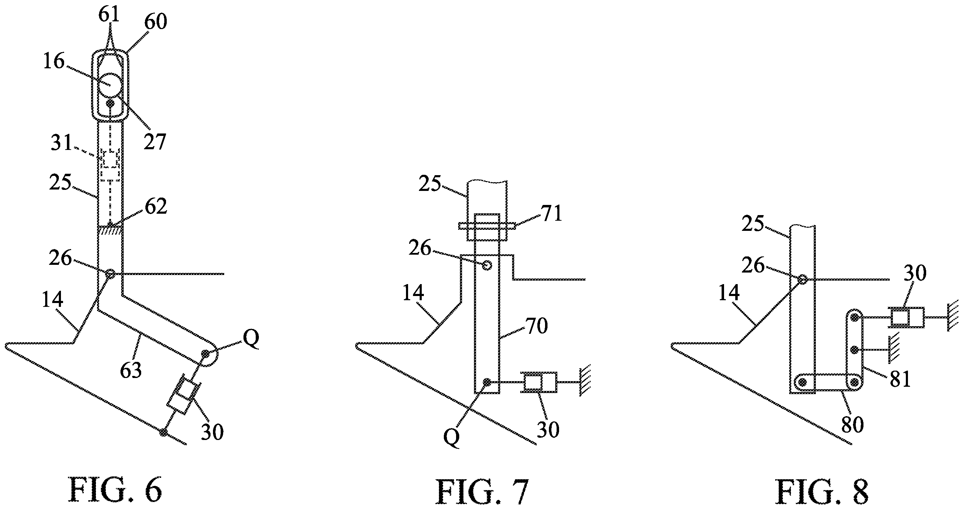

Une telle réalisation est illustrée schématiquement sur la figure 6. Dans cet exemple, le bras 25 se présente sous la forme d'un profilé creux dans lequel est logé le piston amortisseur 31. Celui-ci est connecté, de préférence de manière articulée, entre le coupleur 27 fixé au hauban 16 et un point 62 fixe par rapport au bras 25 et situé vers la partie inférieure de celui-ci. Le bras 25 est prolongé à son extrémité supérieure par un cadre 60 qui entoure le hauban 16 et le collier 27. Ce cadre 60 joue ici le rôle de guide. Ses flancs présentent deux surfaces de glissement 61 dirigées vers l'intérieur qui coopèrent avec le coupleur 27 pour guider celui-ci dans son coulissement par rapport au bras 25. Les surfaces de glissement 61 forment deux rails parallèles à la direction X du bras 25 et sont garnies d'un matériau à faible coefficient de frottement pour faciliter le coulissement du coupleur 27. Une telle réalisation permet d'utiliser un piston 31 de relativement grande course.

Dans l'exemple illustré par la figure 6, le bras 25 présente, sous le pivot 26, un prolongement coudé 63 dont l'extrémité est connectée de manière articulée au premier piston amortisseur 30 au point Q. Un tel prolongement coudé permet d'envisager différents positionnements possibles de l'amortisseur 30 en fonction des contraintes d'encombrement près des bords du tablier 14.

La réalisation illustrée par les figures 4 et 5 est avantageuse du point de vue esthétique étant donné que seul le bras oscillant 25 émerge de la face supérieure du tablier 14, jusqu'à pénétrer dans le guide 28. Le pivot 26 est situé dans l'épaisseur du tablier 14, de même que le piston du premier amortisseur 30 qui est placé en sous-face du tablier 14. La partie inférieure du bras oscillant 15 peut se mouvoir dans une réservation 48 de forme appropriée aménagée sur le côté inférieur du tablier 14. Des avantages similaires sont obtenus avec une réalisation du type de la figure 6.

Le pivot 26 est positionné le long du bras 25 pour obtenir un effet de levier pour l'action du premier amortisseur 30, ce qui permet à celui-ci d'avoir une configuration compacte. Pour cela, la distance D entre le pivot et le point d'attache P du coupleur 27 est supérieure au bras de levier du piston 30, qui est égal à la distance d entre le pivot et le point de connexion Q du piston 30 sur le bras 25 dans la configuration particulière schématisée sur la figure 5 (ou approximativement égal à la longueur du prolongement coudé 63 dans la configuration particulière schématisée sur la figure 6). La distance notée D ci-dessus est bien entendu variable en fonction de l'allongement du piston 31. Quand il est indiqué que D ≥ d, il faut entendre que D est toujours supérieur à d, même quand le piston 31 a sa longueur minimale. Pour accroître l'effet de levier, on agence de préférence le bras 25 de façon à assurer que D ≥ 3d.

Le fait que le pivot 26 soit à rotule permet au dispositif 22 d'admettre des mouvements du point d'attache P du hauban selon une direction perpendiculaire au bras 25 dans le plan contenant le hauban 16 et le bras 25. Ces mouvements peuvent être dus soit aux vibrations du hauban si le bras 25 ne lui est pas strictement perpendiculaire, soit à son allongement dû à la dilatation thermique.

Une variante consiste à réaliser le pivot 26 par une articulation de type cardan entre le tablier 14 et le bras 15, c'est-à-dire avec deux axes d'articulation mutuellement perpendiculaires. Une telle variante est illustrée très schématiquement sur la figure 7. L'un des deux axes fournit le pivot 26 proprement dit en étant fixe par rapport au tablier 14 et essentiellement parallèle au plan vertical contenant le hauban 16, de sorte que les oscillations du bras 25 qu'il autorise sont communiquées au premier piston 30 pour qu'il les amortisse. Le deuxième axe 71 de l'articulation à cardan est fixe par rapport au bras 25 et essentiellement perpendiculaire au plan vertical contenant le hauban 16, de sorte que les oscillations du bras 25 qu'il autorise sont absorbées sans être communiquées au premier piston 30. Le bras 25 présente alors une partie inférieure 70 qui lui est articulée autour de l'axe 71 et qui est elle-même articulée par rapport au tablier 14 autour de l'axe perpendiculaire 26. Le point Q de connexion du premier amortisseur 30 est situé à l'extrémité basse de la partie inférieure 70 du bras 25.

Un autre agencement possible du premier amortisseur 30 est représenté schématiquement sur la figure 8. Dans cet exemple, le premier amortisseur 30 est relié au bras 25 dans le tablier 14 sous le pivot 26 par l'intermédiaire de deux bielles 80, 81. La bielle 80 a une extrémité articulée au pied du bras 25 et une autre extrémité articulée à une première extrémité de la bielle 81. La seconde extrémité de la bielle 81 présente la liaison articulée avec le premier amortisseur 30. En outre, la bielle 81 présente une articulation supplémentaire par rapport à un point fixe du tablier 14 en une position intermédiaire entre ses première et seconde extrémités. Dans l'exemple représenté sur la figure 8, la bielle 80 s'étend perpendiculairement au bras 25 lorsque celui-ci est au repos, tandis que la bielle 81 s'étend sensiblement parallèlement au bras 25. Les bielles 80, 81 forment un mécanisme de démultiplication de la force d'amortissement lorsque c'est nécessaire. On notera que des configurations très variées peuvent être proposées pour jouer sur les bras de levier relatifs des forces exercées transversalement sur le bras 25 par le hauban 16 soumis à ses sollicitations dynamiques d'une part et par le piston amortisseur 30 d'autre part.

Les modes de réalisation décrits et évoqués ci-dessus sont des illustrations de la présente invention. Diverses modifications peuvent leur être apportées sans sortir du cadre de l'invention qui ressort des revendications annexées.

## Revendications

1. Dispositif d'amortissement de vibrations d'un câble, le dispositif (22) comprenant:
- un bras (25) oscillant autour d'un pivot (26) ;
- un premier amortisseur (30) pour amortir certaines au moins des oscillations du bras; et
- un coupleur (27) attaché au câble (16),
et étant **caractérisé par** :
- un second amortisseur (31) à course linéaire ayant une extrémité supérieure reliée au coupleur et une extrémité inférieure reliée au bras ; et
- un guide (28, 60) pour faire coulisser le coupleur par rapport au bras parallèlement à la course du second amortisseur de façon que les mouvements du câble transversaux à la course du second amortisseur soient communiqués au bras indépendamment du second amortisseur.

2. Dispositif d'amortissement selon la revendication 1, dans lequel le premier amortisseur comprend au moins un piston (30) disposé transversalement au bras (25).

3. Dispositif d'amortissement selon la revendication 2, dans lequel ledit piston (30) est connecté au bras (25) au-dessous du pivot (26).

4. Dispositif d'amortissement selon la revendication 2 ou la revendication 3, dans lequel ledit piston (30) est placé sous une face supérieure d'une structure (14) suspendue à l'aide du câble (16).

5. Dispositif d'amortissement selon la revendication 4, dans lequel le pivot (26) est positionné relativement au bras (25) de façon que la distance (D) entre le pivot et le point d'attache (P) du coupleur (27) sur le câble (16) soit supérieure au bras de levier, relativement au pivot, de la force exercée par le piston (30) sur le bras, et de préférence au moins trois fois supérieur audit bras de levier.

6. Dispositif d'amortissement selon l'une quelconque des revendications précédentes, dans lequel le pivot (26) est placé dans l'épaisseur d'une structure (14) suspendue à l'aide du câble (16).

7. Dispositif d'amortissement selon l'une quelconque des revendications précédentes, dans lequel le pivot (26) fournit une articulation à rotule ou à cardan.

8. Dispositif d'amortissement selon l'une quelconque des revendications précédentes, dans lequel le pivot (26) est sensiblement fixe par rapport à une structure (14) suspendue à l'aide du câble (16).

9. Dispositif d'amortissement selon l'une quelconque des revendications précédentes, comprenant des patins de glissement (45) entre le bras (25) et le guide (28).

10. Dispositif d'amortissement selon l'une quelconque des revendications précédentes, dans lequel le guide (28) autorise le coulissement du coupleur (27) par rapport au bras (25) par au moins un contact glissant (45) situé sous une extrémité basse du second amortisseur (31).

11. Dispositif d'amortissement selon l'une quelconque des revendications 1 à 9, dans lequel le guide (60) autorise le coulissement du coupleur (27) par rapport au bras (25) par au moins un contact glissant (61) situé au-dessus du second amortisseur (31).

12. Dispositif d'amortissement selon la revendication 11, dans lequel le bras (25) est creux et le second amortisseur (31) à course linéaire est logé dans le bras en étant connecté entre le coupleur (27) et un point (62) fixe par rapport au bras.

13. Dispositif d'amortissement selon l'une quelconque des revendications précédentes, dans lequel le premier amortisseur (30) est relié au bras (25) par l'intermédiaire d'un mécanisme (80, 81) de démultiplication d'effort.

14. Pont à haubans, comprenant au moins un pylône (20), un tablier (14), des haubans (16) constitués de câbles s'étendant obliquement entre le pylône et le tablier pour suspendre le tablier, et au moins un dispositif d'amortissement (22) selon l'une quelconque des revendications précédentes monté entre un câble et le tablier.

## Patentansprüche

1. Dämpfungsvorrichtung zur Dämpfung von Schwingungen in einem Kabel, wobei die Vorrichtung (22) aufweist:
- einen um einen Drehpunkt (26) oszillierenden Arm (25);
- einen ersten Dämpfer (30), um mindestens einige der Oszillationen des Arms zu dämpfen; und
- einen an dem Kabel (16) angebrachten Koppler (27),
und **gekennzeichnet durch**:
- einen zweiten Linearhub-Dämpfer (31), der ein mit dem Koppler verbundenes oberes Ende und ein mit dem Arm verbundenes unteres Ende hat; und
- eine Führung (28, 60), um den Koppler bezüglich des Arms parallel zum Hub des zweiten Dämpfers gleiten zu lassen, derart, dass die zum Hub des zweiten Dämpfers transversalen Bewegungen des Kabels unabhängig von dem zweiten Dämpfer auf den Arm übertragen werden.

2. Dämpfungsvorrichtung nach Anspruch 1, in welcher der erste Dämpfer mindestens einen transversal zum Arm (25) angeordneten Kolben (30) aufweist.

3. Dämpfungsvorrichtung nach Anspruch 2, in welcher der Kolben (30) unterhalb des Drehpunkts (26) mit dem Arm (25) verbunden ist.

4. Dämpfungsvorrichtung nach Anspruch 2 oder Anspruch 3, in welcher der Kolben (30) unterhalb einer oberen Fläche einer mit Hilfe des Kabels (16) aufgehängten Struktur (14) angeordnet ist.

5. Dämpfungsvorrichtung nach Anspruch 4, in welcher der Drehpunkt (26) relativ zu dem Arm (25) angeordnet ist, derart, dass der Abstand (D) zwischen dem Drehpunkt und dem Anbringungspunkt (P) des Kopplers (27) an dem Kabel (16) größer als der auf den Drehpunkt bezogene Hebelarm der von dem Kolben (30) auf den Arm ausgeübten Kraft und vorzugsweise mindestens drei Mal größer als der Hebelarm ist.

6. Dämpfungsvorrichtung nach einem der vorstehenden Ansprüche, in welcher der Drehpunkt (26) in der Dicke einer mit Hilfe des Kabels (16) aufgehängten Struktur (14) angeordnet ist.

7. Dämpfungsvorrichtung nach einem der vorstehenden Ansprüche, in welcher der Drehpunkt (26) ein Kugelgelenk oder ein Kardangelenk bereitstellt.

8. Dämpfungsvorrichtung nach einem der vorstehenden Ansprüche, in welcher der Drehpunkt (26) im Wesentlichen ortsfest bezüglich einer mit Hilfe des Kabels (16) aufgehängten Struktur (14) ist.

9. Dämpfungsvorrichtung nach einem der vorstehenden Ansprüche, aufweisend Gleitschuhe (45) zwischen dem Arm (25) und der Führung (28).

10. Dämpfungsvorrichtung nach einem der vorstehenden Ansprüche, in welcher die Führung (28) das Gleiten des Kopplers (27) bezüglich des Arms (25) mit Hilfe mindestens eines unterhalb eines unteren Endes des zweiten Dämpfers (31) angeordneten Gleitkontakts (45) erlaubt.

11. Dämpfungsvorrichtung nach einem der Ansprüche 1 bis 9, in welcher die Führung (60) das Gleiten des Kopplers (27) bezüglich des Arms (25) mit Hilfe mindestens eines oberhalb des zweiten Dämpfers (31) angeordneten Gleitkontakts (61) erlaubt.

12. Dämpfungsvorrichtung nach Anspruch 11, in welcher der Arm (25) hohl ist und der zweite Linearhub-Dämpfer (31) in dem Arm untergebracht ist, indem er zwischen dem Koppler (27) und einem bezüglich des Arms ortsfesten Punkt (62) eingebaut ist.

13. Dämpfungsvorrichtung nach einem der vorstehenden Ansprüche, in welcher der erste Dämpfer (30) über einen Kraftuntersetzungsmechanismus (80, 81) mit dem Arm (25) verbunden ist.

14. Schrägseilbrücke, aufweisend mindestens einen Pylon (20), eine Fahrbahnplatte (14), sich schräg zwischen dem Pylon und der Fahrbahnplatte erstreckende, aus Kabeln gebildete Schrägseile (16) zum Aufhängen der Fahrbahnplatte und mindestens eine zwischen einem Kabel und der Fahrbahnplatte angebrachte Dämpfungsvorrichtung (22) nach einem der vorstehenden Ansprüche.

## Claims

1. A device for damping vibrations of a cable, the device (22) comprising:
- an arm (25) oscillating about a pivot (26) ;
- a first damper (30) for damping at least some of the oscillations of the arm; and
- a coupler (27) attached to the cable (16),
and being **characterized by**:
- a second damper (31) having a linear-stroke, an upper end connected to the coupler and a lower end connected to the arm; and
- a guide (28, 60) for letting the coupler slide with respect to the arm parallel to the stroke of the second damper so that movements of the cable transverse to the stroke of the second damper are communicated to the arm independently of the second damper.

2. The damping device as claimed in claim 1, wherein the first damper comprises at least one piston (30) disposed transversely to the arm (25).

3. The damping device as claimed in claim 2, wherein said piston (30) is connected to the arm (25) below the pivot (26).

4. The damping device as claimed in claim 2 or claim 3, wherein said piston (30) is placed under an upper face of a structure (14) suspended by means of the cable (16).

5. The damping device as claimed in claim 4, wherein the pivot (26) is positioned relative to the arm (25) so that a distance (D) between the pivot and the point (P) of attachment of the coupler (27) to the cable (16) is greater than a lever arm, relative to the pivot, of a force exerted by the piston (30) on the arm, and preferably at least three times greater than said lever arm.

6. The damping device as claimed in any one of the preceding claims, wherein the pivot (26) is placed within a thickness of a structure (14) suspended by means of the cable (16).

7. The damping device as claimed in any one of the preceding claims, wherein the pivot (26) provides a ball joint or gimbal type of articulation.

8. The damping device as claimed in any one of the preceding claims, wherein the pivot (26) is substantially fixed with respect to a structure (14) suspended by means of the cable (16).

9. The damping device as claimed in any one of the preceding claims, comprising sliding shoes (45) between the arm (25) and the guide (28).

10. The damping device as claimed in any one of the preceding claims, wherein the guide (28) lets the coupler (27) slide with respect to the arm (25) by at least one sliding contact (45) situated under a lower end of the second damper (31).

11. The damping device as claimed in any one of claims 1 to 9, wherein the guide (60) lets the coupler (27) slide with respect to the arm (25) by at least one sliding contact (61) situated above the second damper (31).

12. The damping device as claimed in claim 11, wherein the arm (25) is hollow and the second linear-stroke damper (31) is housed in the arm while being connected between the coupler (27) and a point (62) fixed with respect to the arm.

13. The damping device as claimed in any one of the preceding claims, wherein the first damper (30) is connected to the arm (25) via a force gearing-down mechanism (80, 81).

14. A cable-stayed bridge, comprising at least one tower (20), a deck (14), stays (16) consisting of cables extending obliquely between the tower and the deck in order to suspend the deck, and at least one damping device (22) as claimed in any one of the preceding claims mounted between a cable and the deck.
